# EUROPEAN PATENT SPECIFICATION

(11) **EP 2 384 622 B1**
(45) Date of publication and mention of the grant of the patent: **12.02.2014**
(21) Application number: 10275123.7
(22) Date of filing: 03.12.2010
(51) Int. Cl.: A01K 83/06, A01K 97/04

(54) **High visibility hair rig bait stop**
Hair-Rig-Köderstopper mit hoher Sichtbarkeit
Butée de monture d'appât de type hair rig à haute visibilité

(30) Priority: 03.12.2009 GB 0921180
(43) Date of publication of application: 09.11.2011
(73) Proprietor: Preston Innovations Limited, Telford, Staffordshire TF3 3BA (GB)
(72) Inventor: Preston, David, Shropshire TF3 3BD (GB)
(74) Representative: Newell, William Joseph

(56) References cited:
- GB-A- 2 373 700
- GB-A- 2 388 289
- US-A- 5 117 575
- US-A- 5 890 317

## Description

This invention relates to bait stops used in modern fishing rigs.

Increasingly, anglers use a method commonly known as hair rigging to attach baits to their hooks, in order to achieve a more effective bait presentation.

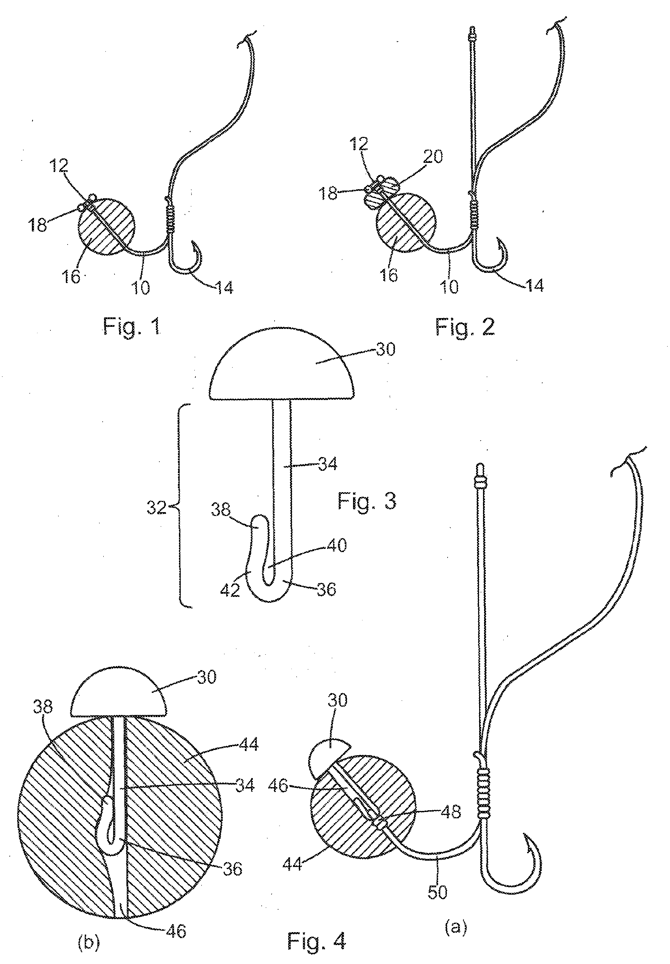

Referring to Figure 1 of the accompanying drawings, a "hair rig" basically consists of a separate short length of fishing line 10 normally referred to as the "hair" with a loop 12 tied at one end. The other end of the hair is tied to the fishing hook 14 and a bait 16 can be attached to the hair using one of several different designs of bait stop 18, of which the dumbbell shape is a typical example. Most existing designs of bait stops attempt to be of minimal size and of shape flat to the bait, in order to remain as visually undetected as possible (see e.g. GB 2 373 700).

As seen in Figure 2, one common practice currently is to add a bright coloured piece of material 20 between the bait 16 on the hair rig and the bait stop 18 that holds the bait on the hair. The piece 20 of bright coloured material can attract fish to the bait that it is fixed to, therefore making the rig more effective. The above current practice is difficult for the angler to do, because the angler is required to thread the hair through holes that have been drilled through both the bait and the coloured material, and then to pass a bait stop inside the loop of the hair rig, and pull the line tight at the same time.

There is a need therefore for a bait stop and method of application thereof which facilitates threading and capture of the hair.

US5890317 discloses a bait holding attachment for a fish hook comprising a loop or U-shaped bend.

US5117575 discloses a bait attachment device comprising a block having apertures into which flexible needles carrying locking knobs are inserted to embrace the bait fish and the hook shank.

Accordingly, in one aspect, this invention provides a bait stop, according to claim 1, having a head portion and a hook portion, the hook portion having a shank merging with a bend which merges with a tip, wherein the tip is of flattened form relative to the bend and extends alongside said shank, and said hook portion has a smooth uninterrupted profile when viewed in side view and is designed in use to be pushed into an undersized bore in a bait piece, whereby, having placed a length of line in the gape of the hook portion, and inserting the hook portion into an undersized bore of a bait piece, the tip is urged resiliently towards or into contact with said shank to hold the hook portion closed around the line.

Preferably, the facing internal surfaces of the shank, bend and tip are configured to define a hook aperture that has a broad base adjacent the bend but which narrows at a neck opening between the tip and the shank, whereby in use, the line may be introduced into the hook aperture via said neck opening, with the broader base region accommodating the line when the hooked portion is inserted in use into the bore of a bait piece, thereby closing or further narrowing said neck opening.

Preferably a further extent, or the free end, of the tip region extends generally parallel to the shank. In order to assist location and insertion of the hook into the bait, the exterior, leading surface of the bait may be provided with a pointed region.

The bait stop may be manufactured by a number of different manufacturing processes. For example, the hook portion may be a one-piece plastics moulding. In certain applications the head portion and the hook portion are a one-piece plastics moulding. Alternatively, where required for ease of manufacture or otherwise, the hook portion and the head portion may be separate plastics mouldings that are later assembled for use. This enables the head portion to have different material properties to the hook portion. Thus the head portion and hook portion may differ in one or more of e.g. hardness, flexibility, density, texture, surface absorption, colour, reflectivity and wettability.

Additionally, the angler may often wish to vary the length of the hair so as to adjust the spacing of the bait from the hook. Doing this by shortening of retying the hair is awkward and time consuming. In a preferred aspect therefore this invention enables the spacing of the bait from the hook to be selected between a "short" and a "long" spacing by providing the bait stop with respective short and long hook portions.

In one arrangement, a long stemmed version of the bait stop has a hook length (as measured from the underside of the head portion to the bottom outside surface of the bend) of between 9mm and 12mm, and preferably between 10mm and 11 mm. When a shorter effective hair length is required, the bait stop may have a hook length of between 4mm and 7mm and preferably between 5mm and 6mm.

One possible embodiment of the above invention could be in the form of a dome shape, with a long narrow hook shape extending from the centre of the dome base. In one particular illustrative embodiment, the hook shape would have an overall width of between 1.50mm and 3.5mm to enable it to pass through a drilled hole in a bait. The hook shape elements may have a thickness of between 0.50mm and 1.50mm to enable its shape to flex closed when pulled inside the drilled bait, thus trapping the hair line loop within the hook shape. The brightly coloured dome shape may protrude from the edge of the bait, enabling it to be viewed from the all directions.

A second possible embodiment of the above invention would be a shape similar to that of a piece of sweetcorn or maize, which generally is a flattened cubed shape with rounded corners, with the same hook shape extending from a central position of the side of the corn shape.

In either of the above embodiments the dome shape or corn shaped top could be formed from a separate piece of material to the hook shape, enabling the introduction of different desired material properties such as softness and buoyancy to the dome or corn shape, while keeping the required material properties of the hook part.

In a further aspect, according to claim 12, this invention provides a method of applying a bait piece to a fishing line which comprises the steps of:
providing a bait piece with a bore,
providing a bait stop having a head portion and a hook portion, the hook portion having a shank merging with a bend which merges with a tip, wherein the tip is of flattened form relative to the bend and extends alongside said shank,
passing a length of fishing line through the bore in said bait piece,
hooking the hook portion of said bait stop around said line, and
inserting said hook portion into the bore of said bait so that the tip of the hook portion is urged resiliently towards or into contact with the shank to hold the hook portion closed around the line.

By way of example only, various embodiments of the invention will now be described in detail, reference being made to the accompanying drawings in which:
Figure 1 is a diagram showing a conventional form of hair rig;
Figure 2 is a diagram showing a conventional form of hair rig with the modification of a bright piece of coloured material between the bait and the bait stop;
Figure 3 is a side view of a first embodiment of bait stop in accordance with this invention;
Figure 4a is a diagram showing attachment of the bait stop of Figure 3 to a hair rig, and Figure 4b is an enlarged view showing closure of the hook portion upon insertion of the bait stop and bait;
Figures 5a and 5b are top and side views respectively of a second embodiment of bait stop formed in a single moulding;
Figures 6a and 6b are top and side cross sectional views respectively through a third embodiment of bait stop in accordance with this invention in which the hook and head are moulded of different plastics materials;
Figure 7 is a cross sectional view showing a bait stop similar to that of Figure 3 but with a hook portion of shorter shank length, inserted in a bait piece, and
Figures 8a and 8b are top and side cross section views respectively of a further embodiment of bait stop;

The various embodiments of bait stop described and illustrated in Figures 3 to 8 below are intended to be hooked onto the loop at one end of a hair and then pressed into a bore in a bait piece to secure the bait to the hair and to leave an exposed surface near the bait that is visually or otherwise attractive to the fish.

Referring initially to Figures 3, 5, 6 and 8, the general form of the bait stop comprises an enlarged head 30 attached to an elongate hooked portion 32. The head is designed to be visually prominent when attached to a bait and typically has a transverse dimension that is at least 30% of the diameter of the bait and preferably 50% or so. The hook portion is made up of a shank or stem 34, a bend 36 and a tip 38 all of generally circular cross section. The shank 32 is straight and the cooperating inner surface regions of the shank, bend and tip define a hook aperture 40 that has a relatively broad base but necks or narrows in the entry region towards the free end of the tip. The outer surfaces of the shank bend and tip define a rounded swollen region 42 that then narrows slightly towards the tip.

Referring to Figures 4a and b, the bait stop is designed for use with a bait piece 44 that has a drilled, undersize, bore 46 of diameter slightly less than the swollen external region of the hook portion. In use, the loop 48 of the hair 50 is passed though the bore 40 of the bait piece 44 to leave the loop projecting from the bait piece. The hook portion of the bait stop is then offered up to the loop, and the loop hooked into the hook aperture to be received in the broader based portion. The bait stop is then pushed into the bait piece (or the bait piece pulled over the hook portion) to introduce the hook portion into the undersize bore. This cooperates with the swollen portion to squeeze the hook closed so that it closes the hook aperture safely trapping the hair loop inside, as seen in Figure 4a and b. In this way the hair is safely trapped and the bait secured to the hair.

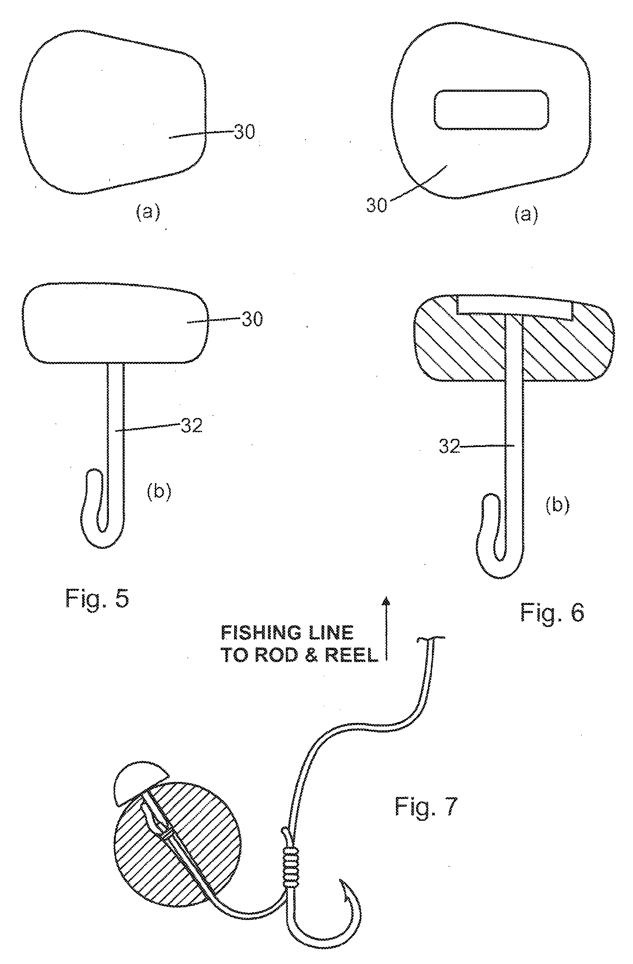

Referring to Figures 5 and 6, these show a bait stop with a differently shaped head designed to look like a piece of sweetcorn or maize. The bait stop in Figures 5a and 5b forms the head 30 and the hook portion 32 in a single moulding. In Figures 6a and 6b, the hook portion 32 is moulded from one material and the head portion 30 from another and the two then assembled by pushing the hooked portion through the head portion. This means that the hook portion can be optimised to have the strength and flexibility, resilience etc. characteristics required to fulfil the function of securely gripping the hair whereas the head portion may have properties designed to provide maximum attraction to the fish. This may simply be in the form of the colouring or texture of the material or it may provide a buoyancy effect to ensure that the bait moves in a particular way. Still further, the head may be of absorbent material to allow fish oil or other appetising substances to be rubbed on the head portion of the bait stop before use.

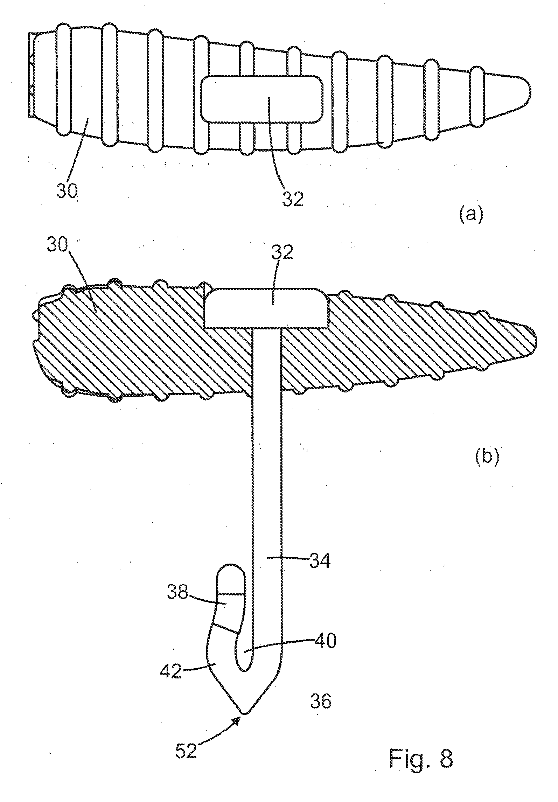

Figure 8 shows another embodiment which is made in two parts. Here the head is designed to look like a maggot. The hook is similar to those of the previous embodiments but carries a pointed end 52 to assist insertion into the bait piece.

## Claims

1. A bait stop having a head portion (30) and a hook portion (32), the hook portion having a shank (34) merging with a bend (36) which merges with a tip (38), **characterised in that** the tip (38) is of flattened form relative to the bend (36) and extends alongside said shank (34), and the shank of said hook portion has a smooth uninterrupted profile when viewed in side view and is designed in use to be pushed into an undersized bore (46) of a bait piece (38), whereby having placed a length of line (48) in the gape (40) of the hook portion, and inserting the hook portion into an undersized bore of a bait piece, the tip is urged resiliently towards or into contact with said shank to hold the hook portion closed around the line.

2. A bait stop according to claim 1, wherein the facing surfaces of the shank (34), bend (36) and tip (38) are configured to define a hook aperture (40) that has a broad base adjacent the bend (36) but which narrows at a neck opening between the tip and the shank, whereby in use, the line (48) may be introduced into the hook aperture via said neck opening, with the broad base region accommodating the line when the hooked portion is inserted in use into the bore of a bait piece, thereby closing or further narrowing said neck opening.

3. A bait stop according to claim 1 or claim 2, wherein at least a further extent of the tip region (38) extends generally parallel to the shank (34).

4. A bait stop according to any of the preceding claims, wherein the exterior surface of the bend (36) is provided with a pointed region (52).

5. A bait stop according to any of the preceding claims, wherein the hook portion (32) is a one-piece plastics moulding.

6. A bait stop according to claim 5, wherein the head portion (30) and the hook portion (32) are a one-piece plastics moulding.

7. A bait stop according to any of claims 1 to 5, wherein the head portion (30) is a plastics moulding.

8. A bait stop according to claim 7, wherein the head portion (30) has different material properties to the hook portion (32).

9. A bait stop according to claim 8, wherein the head portion and the hook portion (32) differ in one or more of hardness, flexibility, density, texture, surface absorption, colour, reflectivity and wettability.

10. A bait stop according to any of the preceding claims, wherein the length of the shank (34) is between 9mm and 12mm.

11. A bait stop according to any of claims 1 to 9 wherein the length of the shank (34) is between 4mm and 7mm.

12. A method of applying a bait piece (44) to a fishing line (48) which comprises the steps of:
providing a bait piece (44) with a bore (46),
providing a bait stop having a head portion (30) and a hook portion (32), the hook portion having a shank (34) merging with a bend (36) which merges with a tip (38), wherein the tip (38) is of flattened form relative to the bend (36) and extends alongside said shank (34),
passing a length (48) of fishing line through the bore (46) in said bait piece (38),
hooking the hook portion (32) of said bait stop around said line (48), and
inserting said hook portion (32) into the bore (46) of said bait (38) so that the tip (38) of the hook portion is urged resiliently towards or into contact with the shank (34) to hold the hook portion closed around the line.

## Patentansprüche

1. Köderstopper mit einem Kopfteil (30) und einem Hakenteil (32), wobei der Hakenteil einen Schaft (34) aufweist, der in eine Biegung (36) übergeht, an die sich eine Spitze (38) anschließt, **dadurch gekennzeichnet, daß** die Spitze (38) relativ zu der Biegung (36) eine abgeflachte Form aufweist und sich längs des Schaftes (34) erstreckt, und daß der Schaft des Hakenteils ein glattes, ununterbrochenes Profil hat, wenn er in Seitenansicht gesehen wird, und so gestaltet ist, daß er bei Benutzung in eine Bohrung (46) eines Köderstückes (38) hineingeschoben wird, die eine geringere Größe aufweist, wodurch eine Länge der Schnur (28) in dem Spalt (40) des Hakenteils plaziert wird und der Hakenteil in eine eine Untergröße aufweisende Bohrung des Köderstückes eingesteckt wird, wobei die Spitze federnd gegen den Schaft oder federnd in Berührung mit dem Schaft gedrückt wird, um den Hakenteil rund um die Schnur geschlossen zu halten.

2. Köderstopper nach Anspruch 1, **dadurch gekennzeichnet, daß** die einander zugewandten Oberflächen des Schaftes (34), der Biegung (36) und der Spitze (38) so gestaltet sind, daß sie eine Hakenöffnung (40) bilden, die neben der Biegung (36) eine breite Basis hat, sich aber an einem Hals, der sich zwischen der Spitze und dem Schaft öffnet, verengt, wodurch bei Benutzung die Schnur (48) in die Hakenöffnung über die Halsöffnung eingeführt werden kann, wobei der breite Basisbereich die Schnur aufnimmt, wenn bei Benutzung der mit dem Haken versehene Teil in die Bohrung eines Köderstückes eingesteckt wird, um dadurch die Halsöffnung zu schließen oder weiter zu verengen.

3. Köderstopper nach Anspruch 1 oder 2, **dadurch gekennzeichnet, daß** sich wenigstens eine weitere Verlängerung des Spitzenbereiches (38) im allgemeinen parallel zu dem Schaft (34) erstreckt.

4. Köderstopper nach einem der vorhergehenden Ansprüche, **dadurch gekennzeichnet, daß** die äußere Oberfläche der Biegung (36) mit einem zugespitzten Bereich (52) versehen ist.

5. Köderstopper nach einem der vorhergehenden Ansprüche, **dadurch gekennzeichnet, daß** der Hakenteil (32) ein einteiliges spritzgegossenes Kunststoffstück ist.

6. Köderstopper nach Anspruch 5, **dadurch gekennzeichnet, daß** der Kopfteil (30) und der Hakenteil (32) ein einteiliges, spritzgegossenes Kunststoffstück ist.

7. Köderstopper nach einem der Ansprüche 1 bis 5, **dadurch gekennzeichnet, daß** der Kopfteil (30) aus spritzgegossenem Kunststoff besteht.

8. Köderstopper nach Anspruch 7, **dadurch gekennzeichnet, daß** der Kopfteil (30) im Vergleich mit dem Hakenteil (32) unterschiedliche Materialeigenschaften hat.

9. Köderstopper nach Anspruch 8, **dadurch gekennzeichnet, daß** der Kopfteil und der Hakenteil (32) sich in einer oder mehreren Eigenschaften unterscheiden, nämlich Härte, Flexibilität, Dichte, Gefüge, Oberflächenabsorption, Farbe, Reflektion und Benetzbarkeit.

10. Köderstopper nach einem der vorhergehenden Ansprüche, **dadurch gekennzeichnet, daß** die Länge des Schaftes (34) zwischen 9 mm und 12 mm beträgt.

11. Köderstopper nach einem der Ansprüche 1 bis 9, **dadurch gekennzeichnet, daß** die Länge des Schaftes (34) zwischen 4 mm und 7 mm beträgt.

12. Verfahren zur Anbringung eines Köderstückes (44) an einer Angelschnur (48), **gekennzeichnet durch** die folgenden Schritte:
Schaffen eines Köderstückes (44) mit einer Bohrung (46),
Schaffen eines Köderstoppers mit einem Kopfteil (30) und einem Hakenteil (32), wobei der Hakenteil einen Schaft (34) aufweist, der in eine Biegung (36) übergeht, die in einer Spitze (38) mündet, welche in Bezug auf die Biegung (36) eine abgeflachte Form aufweist und sich längs des Schaftes (34) erstreckt,
Einführen einer Länge (48) der Angelschnur **durch** die Bohrung (46) in dem Köderstück (38),
Einhaken des Hakenteils (32) des Köderstoppers um die Schnur (48), und
Einstecken des Hakenteils (32) in die Bohrung (46) des Köderstückes (38), so daß die Spitze (38) des Hakenteils federnd in den Schaft (34) oder in Berührung mit diesem gedrückt wird, um den Hakenteil um die Schnur geschlossen zu halten.

## Revendications

1. Butée de monture d'appât ayant une partie tête (30) et une partie crochet (32), la partie crochet ayant une tige (34) fusionnant avec un coude (36) qui fusionne avec une pointe (38), **caractérisée par le fait que** la pointe (38) est de forme aplatie par rapport au coude (36) et s'étend le long de ladite tige (34), et la tige de ladite partie crochet a un profil ininterrompu lisse lorsqu'elle est observée en vue latérale et est conçue lors de l'utilisation pour être poussée dans un alésage sous-dimensionné (46) d'une pièce de monture d'appât (38), ce par quoi en ayant placé une longueur de ligne (48) dans l'ouverture (40) de la partie crochet, et en introduisant la partie crochet dans un alésage sous-dimensionné d'une pièce de monture d'appât, la pointe est sollicitée de manière élastique vers ou en contact avec ladite tige pour maintenir la partie crochet fermée autour de la ligne.

2. Butée de monture d'appât selon la revendication 1, dans laquelle les surfaces se faisant face de la tige (34), du coude (36) et de la pointe (38) sont configurées pour définir une ouverture de crochet (40) qui a une base large adjacente au coude (36) mais qui se rétrécit à une ouverture de col entre la pointe et la tige, ce par quoi, lors de l'utilisation, la ligne (48) peut être introduite dans l'ouverture de crochet par ladite ouverture de col, la région de base large recevant la ligne lorsque la partie accrochée est introduite lors de l'utilisation dans l'alésage d'une pièce de monture d'appât, permettant ainsi de fermer ou de rétrécir davantage ladite ouverture de col.

3. Butée de monture d'appât selon la revendication 1 ou la revendication 2, dans laquelle au moins une autre extension de la région de pointe (38) s'étend généralement parallèlement à la tige (34).

4. Butée de monture d'appât selon l'une quelconque des revendications précédentes, dans laquelle la surface extérieure du coude (36) comporte une région pointue (52).

5. Butée de monture d'appât selon l'une quelconque des revendications précédentes, dans laquelle la partie crochet (32) est un moulage de matière plastique en une pièce.

6. Butée de monture d'appât selon la revendication 5, dans laquelle la partie tête (30) et la partie crochet (32) sont un moulage de matière plastique en une pièce.

7. Butée de monture d'appât selon l'une quelconque des revendications 1 à 5, dans laquelle la partie tête (30) est un moulage de matière plastique.

8. Butée de monture d'appât selon la revendication 7, dans laquelle la partie tête (30) a des propriétés de matière différentes par rapport à la partie crochet (32).

9. Butée de monture d'appât selon la revendication 8, dans laquelle la partie tête et la partie crochet (32) diffèrent dans une ou plusieurs parmi la dureté, la flexibilité, la densité, la texture, l'absorption de surface, la couleur, la réflectivité et la mouillabilité.

10. Butée de monture d'appât selon l'une quelconque des revendications précédentes, dans laquelle la longueur de la tige (34) est entre 9 mm et 12 mm.

11. Butée de monture d'appât selon l'une quelconque des revendications 1 à 9, dans laquelle la longueur de la tige (34) est entre 4 mm et 7 mm.

12. Procédé d'application d'une pièce de monture d'appât (44) à une ligne de pêche (48), qui comprend les étapes de :
- fournir une pièce de monture d'appât (44) ayant un alésage (46) ;
- fournir une butée de monture d'appât ayant une partie tête (30) et une partie crochet (32), la partie crochet ayant une tige (34) fusionnant avec un coude (36) qui fusionne avec une pointe (38), la pointe (38) étant de forme aplatie par rapport au coude (36) et s'étendant le long de ladite tige (34),
- faire passer une longueur (48) de ligne de pêche à travers l'alésage (46) dans ladite pièce de monture d'appât (38) ;
- accrocher la partie crochet (32) de ladite butée de monture d'appât autour de ladite ligne (48) ; et
- introduire ladite partie crochet (32) dans l'alésage (46) de ladite monture d'appât (38) de telle sorte que la pointe (38) de la partie crochet est sollicitée de manière élastique vers ou en contact avec la tige (34) pour maintenir la partie crochet fermée autour de la ligne.
